# EUROPEAN PATENT APPLICATION

(11) **EP 3 358 862 A1**
(43) Date of publication of application: **08.08.2018**
(21) Application number: 18154783.7
(22) Date of filing: 01.02.2018
(51) Int. Cl.: H04S 5/00

(54) **METHOD AND DEVICE FOR STEREOPHONIC DEPICTION OF VIRTUAL NOISE SOURCES IN A VEHICLE**

(30) Priority: 06.02.2017 DE 102017102234
(71) Applicant: Visteon Global Technologies, Inc., Van Buren Township, MI 48111-5711 (US)
(72) Inventor: Van Laack, Alexander, 52072 Aachen (DE); Torschmied, Axel, 75334 Strabenhardt (DE); Wasserfuhr, Peter W., 51143 Köln (DE)
(74) Representative: Dummett Copp LLP

(57) **Abstract**

The invention relates to a method and a device for stereophonic representation of virtual noise sources in a vehicle, in which real noise sources caused on the vehicle are used as the basis for generating virtual noise sources. With the method for stereophonic representation of virtual noise sources in a vehicle (11), a sound of a real noise source (10.1, 10.2, 10.3) of a vehicle (11) is detected at least one detection position on or in the vehicle (11) as at least one monophonic audio signal (1) and using the at least one detected monophonic audio signal (1), at least one additional monophonic audio signal (3) and at least the positional data of the detection position, a sound at least of one virtual noise source is generated as at least one sonic object (4), wherein the at least one detected monophonic audio signal (1) and the at least one additional monophonic audio signal (3) are rendered so that the sound of the at least one virtual noise source is reproduced as a sonic object (4) in a virtual sonic space at least at the detection position and conveyed into a passenger compartment of the vehicle (11).

## Description

The invention relates to a method and a device for stereophonic representation of virtual noise sources in a vehicle, wherein real noise sources produced in a vehicle are used as the basis for generation of virtual noise sources.

For passenger-compartment sonic improvement in vehicles, it is desired to imitate certain directional sounds of noise sources on or in vehicles, such as tire rolling noises, engine noises, air intake noises or exhaust system noises caused by the vehicle, and if necessary to modify them, to make possible an intense acoustic driver experience. However, in known systems, such as for example the system known from US 20120177214 A1, which discloses a possibility for improvement in sonic reproduction of engine noises, there is a problem in that only insufficiently homogenous sound environments can be generated, so that the sound cannot be perceived by all vehicle occupants with equal quality. Thus, virtual noise sources with channel-based systems are generated by the superimposition of the output of discrete audio channels, wherein an algorithm computes the tonal output as a superset of discrete audio channels for predefined speaker positions. The optimal hearing position of the generated sonic landscape is only possible at a presettable location, the so-called sweet spot. Outside the sweet spot, the sonic impression is limited or absent, which leads to an incoherent sonic impression of virtual noise sources, so that the virtual noise source sounds artificial to other vehicle occupants.

From US 20140133683A1 a method is known in which virtual noise sources can be depicted as stereophonic objects, in which metadata are assigned to monophonic sonic traces, with the metadata containing information on reproduction position of the sound conveyed by the sonic trace. By renderers of individual sonic traces it is possible to arrange sonic objects of virtual noise sources at various positions in the acoustic space. In methods known from US 20140133683A1, noise sources and sonic objects are generated using preset sonic traces only for a static environment, so that the method is not suited to realistically convey a virtual noise source in the interior of a moving vehicle, in which the interior and exterior sonic backdrops can constantly be changing due to driving noise.

Therefore, the object of the invention is to propose a method and a device for stereophonic representation of virtual noise sources in a vehicle.

The object is achieved by a method with the features of claim 1 and a device with the features of claim 11. Advantageous embodiments or developments are indicated in the dependent claims.

With the invention-specific method for stereophonic representation of virtual noise sources in a vehicle, a sound of a real noise source of a vehicle is detected at at least one detection position, on or in the vehicle, as at least one monophonic audio signal, and using the at least one detected monophonic audio signal, at least one additional monophonic audio signal and at least the positional data of the detection position, a sound at least of one virtual noise source is generated as at least one sonic object, wherein the at least one detected monophonic audio signal and the at least one additional monophonic audio signal are rendered so that the sound of the at least one virtual noise source is reproduced as a sonic object in a virtual sonic space at least at the detection position and conveyed into a passenger compartment of the vehicle.

With the invention-specific method, an object-based sonic representation is implemented. With this, preferably multiple monophonic audio signals are used to generate a sound of a virtual noise source as a sonic object, wherein the monophonic audio signals are rendered using positional data that can be assigned to each monophonic audio signal in the form of metadata, in such a way that the sound of a generated virtual noise source can be reproduced as a sonic object in a virtual sonic space at a desired position, preferably the detection position. The virtual sonic space designates an acoustic space formed for placement of sonic objects, which is formed out over the boundaries of the vehicle's passenger compartment, so that sonic objects can be placed outside the vehicle's passenger compartment. For rendering, an appropriate rendering unit with an audio processor can be provided, which computes a reproduction and a rendering of the sound of a virtual noise source as a sonic object, with the aid of the number and arrangement of speakers present in the passenger compartment of the vehicle. Since the quality of reproduction and the rendering quality of the sound of the virtual noise source as a sonic object is dependent on the number and arrangement of speakers, in the vehicle there should be present a sufficient number of speakers, at least two, to be able to implement the invention-specific method. Advantageously with the rendering, the size of the passenger compartment, the shape of the passenger compartment, the number of speakers and/or arrangement of the speakers is taken into consideration.

Real noise sources can, for example, be the sounds of tires rolling, engine noise, air intake noise, turbocharger noise or exhaust system noise. Noise sources can also be detected which are evoked, for example, by aerodynamic noise on the vehicle body shell.

According to the invention-specific method, the metadata assigned to the at least one detected monophonic audio signal can be transmitted separately. On the reproduction side, the metadata are available to make possible a user- or application-guided modification of the reproduction position of the sound of the virtual noise source and a modification of the sound of the virtual noise source. With the aid of a stereo rendering algorithm, the audio processor computes a channel output for run time, while allowing for the metadata and other rendering information, like information about the speaker positions and other physical information or acoustic information, which for example can be made available as vehicle-specific and/or drive-specific information. The result is that the at least one virtual noise source as a sonic object, such as engine noise for example, can be placed in a virtual sonic space and can be restored or reproduced as a stereophonic object through a speaker array having multiple speakers, wherein the sound waves of the sound of a virtual noise source are reproduced as a summation signal of the multiple speakers. Due to the option for controlling metadata, the sound of the at least one virtual noise source can be freely regulated as a stereo sonic object and be moved and positioned in a virtual sonic space.

In advantageous fashion, the sound of a virtual noise source according to the invention-specific method is not a pure imitation of a real noise source, but is a virtual noise source whose sound has noise components that are real or caused by the vehicle. Thus the sound of the virtual noise source has sonic components typical of the vehicle and specific to the vehicle, that make possible an especially realistic acoustic depiction of the sound of the virtual noise source. Additionally, it is advantageous that the detected sound of a real noise source, or one caused by the vehicle, can contribute as a component to the virtual noise source, that noises or sounds of vehicle defects, such as a rattling of the engine or tire blowouts can be perceived by the vehicle occupants via reproduction and rendering of the sound of the virtual noise source as a sonic object, which would not be possible with a pure imitation of a noise source.

The use of at least one additional monophonic audio signal when generating the sound of the virtual noise source has an advantage in that the sound of the virtual noise source can be modified in accord with a desired acoustic representation. With this, the at least one monophonic audio signal can be used to improve the sonic quality of the sound of real noise sources detected with the monophonic audio signal with reproduction of the sound of the virtual noise source. Therefore, provision can be made when generating the sound of the virtual noise source, that at least one additional monophonic audio signal is used, which upon reproduction and rendering of the sound of the virtual noise source causes an amplification and/or frequency broadening of the sound of the real noise shares. Additionally, provision can be made that with the generation of the sound of the virtual noise source, at least one additional monophonic audio signal can be used, which upon reproduction and rendering of the sound of the virtual noise source causes a suppression or reduction of the volume of frequency shares of the sound of the real noise components.

In advantageous fashion, when detecting the sound of the at least one real noise source, a direction and a distance of the real noise source can be detected. Through detection of the direction and the distance of the real noise source, positional data of the real noise source can be determined, with the positional data of the real noise source being able to be used for positioning of the sonic object of the virtual noise source.

The at least one additional monophonic audio signal can be a detection of a real noise. Additionally, provision can be made that as the at least one additional monophonic audio signal, a synthetic monophonic audio signal can be used. In advantageous fashion, the at least one additional monophonic audio signal can be provided from a data base. Such a data base can include a plurality of additional monophonic audio signals.

According to an advantageous embodiment of the invention-specific method, a sound of a real noise source is detected from multiple positions, with a monophonic audio signal of the sound of the real noise source being detected at each detection position, wherein to each detected monophonic audio signal, its detected position is assigned in the form of a metafile. In advantageous fashion, through the use of multiple detected monophonic audio signals of the sound of the real noise source, better sonic quality can be attained upon generating the sound of the virtual noise source as a sonic object. Additionally, provision can be made that upon generating the sound of the virtual noise source, a plurality of additional monophonic audio signals can be used.

According to another advantageous embodiment of the invention-specific method, provision can be made that upon generating the sound of the at least one virtual noise source as a sonic object, vehicle information from a CAN (controller area network) bus of the vehicle is taken into account. Such data of the vehicle CAN bus can include information about engine speed (rpm's), vehicle speed, rolling down a window or opening a door. Therefore, provision can be made that, via informational items made available through the vehicle CAN bus, allowance can be made for vehicle speed, rolling down of a window and/or opening of a door when generating the sound of the at least one virtual noise source.

Additionally, provision can be made that the at least one detected monophonic audio signal and/or the at least one additional monophonic audio signal are dynamically modulated, with data on the vehicle being able to be taken into account from the CAN bus of the vehicle for the modulation. Through direct modulation of the at least one detected monophonic audio signal and/or of the at least one additional monophonic audio signal, an adjustment of the resulting sound of a generated virtual noise source can be influenced.

According to another advantageous embodiment of the invention-specific method, provision can be made that the position of reproduction of the sound of a virtual noise source can be altered based on CAN bus data. Appropriately, provision can be made that data made available by the vehicle CAN bus can be assigned to the metadata.

According to still another advantageous embodiment of the invention-specific method, provision can be made that the sound of the at least one virtual noise source can be generated on the basis of sounds of multiple real noise sources. In this embodiment, the sounds of multiple noise sources caused on or in the vehicle, such as engine noise, air intake noise and exhaust system noise can be combined to generate a sound of a virtual noise source as a sonic object, with the reproduction position of the sound of the virtual noise source being able to be placed freely in the virtual sonic space.

Additionally, provision can be made that the sounds of multiple different virtual noise sources can be reproduced as sonic objects at various positions in the virtual sonic space. By reproducing the sounds of multiple various virtual noise sources as sonic objects at various positions in the virtual sonic space, an especially realistic stereophonic background can be created, since the reproduction positions of sounds of virtual noise sources can be positioned in the virtual sonic space at the positions of real noise sources.

The invention further comprises a device for stereophonic representation of virtual noise sources in a vehicle. According to the invention, the device comprises at least one microphone placed on or in a vehicle, by which a sound of a real noise source of a vehicle can be detected at least one detection position as at least one monophonic audio signal, a data base having at least one additional monophonic audio signal for making available another monophonic audio signal, a speaker array formed by multiple speakers and a rendering device, that has at least one input for a detected monophonic audio signal, at least one input for another monophonic audio signal, a data input for making metadata available, and multi-channel audio output for controlling the speakers of the speaker array, wherein the rendering device is further set up to generate a sonic object of the sound of at least one virtual noise source using the at least one detected monophonic audio signal, of at least one additional monophonic audio
signal and of at least the positional data of the detection position, wherein the rendering device further is set up for rendering of the at least one detected monophonic audio signal and of the at least one additional monophonic audio signals in such a way that the sound of the at least one virtual noise source is reproduced as a sonic object in a virtual sonic space at least at the detection position with the speakers of the speaker array and is able to be reproduced in a passenger compartment of the vehicle.

Further, provision can be made that a CAN bus of the vehicle is coupled with the rendering device for making available CAN bus data via the data input. Through metadata, information is made available which is used when generating sonic objects. Using information made available via the metadata, the detected monophonic audio signals and/or the additional monophonic audio signals are positioned in a virtual sonic space for reproducing the sound of the virtual sonic source. Additionally, the metadata can have information for modification of individual monophonic audio signals. Preferably, the metadata are assigned to the monophonic audio signals. By making CAN bus data of the vehicle available via the data input of the rendering device, trip-specific and/or vehicle-specific information can be taken into account upon generating the sound of a virtual noise source, so that when there is a change in an interior and/or exterior noise background, which can be evoked by varied driving maneuvers on a trip, the sound of a virtual noise source or the reproduction position of the sound of a virtual noise source can be adjusted.

Preferably the rendering device can have a rendering unit for rendering a sonic object with at least one detected monophonic audio signal, at least one additional monophonic audio signal, and at least the generated positional data of the detection position.

The invention will now be further described, by way of example only, with reference to the accompanying drawings, in which:
Figure 1 is a flow chart for explanation of an embodiment of the invention-specific method for stereophonic depiction of virtual noise sources in a vehicle;
Figure 2 is a schematic depiction for explanation of the invention-specific method in a vehicle; and
Figure 3 is a schematic depiction of an embodiment of a device for stereophonic depiction of virtual noise sources in a vehicle.

Repeated features are provided in the figures with the same reference symbols.

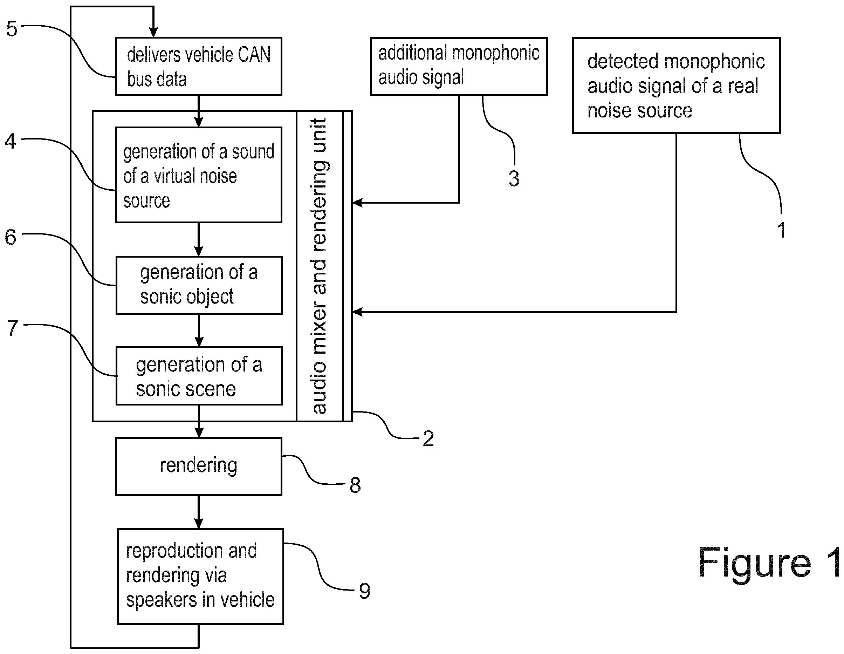

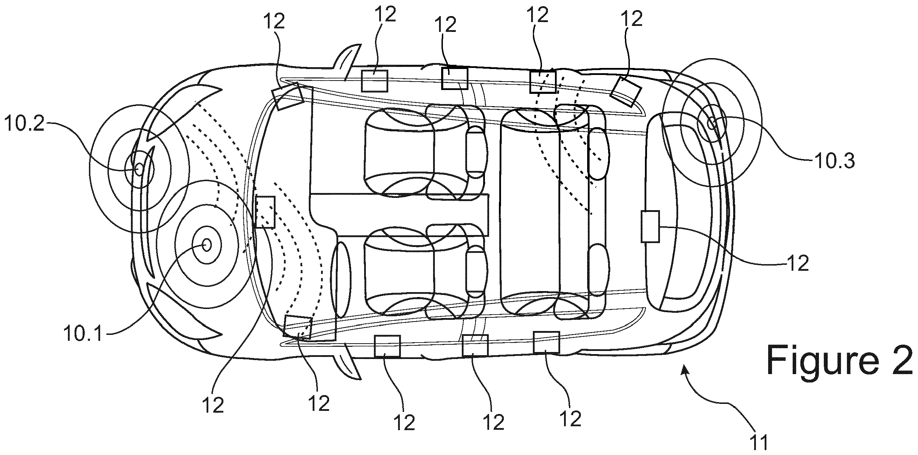

Figure 1 shows a flow chart to elucidate an embodiment of the invention-specific method for stereophonic representation of virtual noise sources in a vehicle. For better comprehension of the invention-specific method, figure 2 can simultaneously be included. The following description therefore relates to figures 1 and 2. With the invention-specific method, a sound of at least one real noise source 10.1, 10.2, 10.3 of a vehicle 11 is detected at least one detection position, on or in vehicle 11, as at least one monophonic audio signal 1, with the at least one monophonic audio signal 1 being assigned positional data of the detection position in the form of metadata. In the present example, the sounds of noise sources 10.1, 10.2, 10.3 are detected in the immediate areas of where they were produced, so that a detection position of each noise source 10.1, 10.2, 10.3 corresponds to the position of the particular noise source 10.1, 10.2, 10.3. The noise source designated by 10.1 is engine noise of vehicle 11. The noise source designated by 10.2 is air intake noise and that designated by 10.3 is exhaust system noise of vehicle 11.

For the sake of simplicity, for the rest of the description, only real noise source 1 is considered, so that detected monophonic audio signal 1 is the monophonic sound of engine noise at noise source 10.1. Detected monophonic audio signal 1 and the metadata assigned to the at least one detected monophonic audio signal 1 are made available to a rendering device 2, which has an audio processor for mixing of monophonic audio signals, a sonic object processor and a rendering unit for rendering of monophonic audio data.

Additionally, on rendering device 2 at least one additional monophonic audio signal 3 is made available, the additional monophonic audio signal 3 being a monophonic audio signal of engine noise made available from a data base. Provision with this can be made that positional data in the form of metadata can be assigned to the at least one additional monophonic audio signal 3, with the metadata being transmitted separately from the at least one additional audio signal 3. In rendering device 2, using the at least one detected audio signal 1, the at least one additional monophonic audio signal 3 and at least the positional data of the detection position, a sound of at least one virtual noise source is generated as at least one sonic object 4. In generating sonic object 4, data 5 made available from the vehicle CAN bus can be taken into account, with CAN bus data 5 possibly being vehicle-specific or trip-specific information. Trip-specific information can for example be information about the vehicle's speed or acceleration. Vehicle-specific information can for example be information about the size and shape of the passenger compartment of vehicle 11. In advantageous fashion, CAN bus data 5 can make available information on opening of doors or rolling down of windows of vehicle 11, since opening of doors or rolling down of windows can cause the noise background of the passenger compartment to change. Information made available as CAN bus data 5 regarding the opening of doors or rolling down of windows can therefore be used as metadata for modification when generating the sound of the virtual noise source as sonic object 4. Since in principle CAN bus data 5 can be used for modification of the sound of the virtual noise source as sonic object 4, CAN bus data 5 can be assigned to the metadata.

Reference symbol 6 designates an additional step in which a reproduction position of generated sonic object 4 of the sound of the virtual noise source is determined in a virtual sonic space using the positional information made available by the metadata. Preferably the reproduction position of sonic object 4 in the virtual sonic space is determined at the detection position of the sound of real noise source 10.1, to achieve as realistic a sonic background as possible in the passenger compartment. In step 7 provision can be made that multiple sonic objects, which are generated for example on the basis of real noise sources 10.2 and 10.3, are arranged with each other to generate a desired sonic scene or noise background. In step 8, the at least one detected monophonic audio signal 1 and the at least one additional monophonic audio signal 3 of sonic object 4 are rendered in such a way that the sound of the at least one virtual noise source is reproduced in the virtual sonic space at the position of real noise source 10.1 via multiple speakers 12 arranged in vehicle 11, and as per step 9 are reproduced in the passenger compartment of vehicle 1. Thus the at least one virtual noise source is placed as sonic object 4 in the virtual sonic space and is restored or reproduced, respectively, as a stereophonic object via a speaker array having multiple speakers 12, wherein the sound waves of the sound of the virtual noise source are reproduced as a summation signal of the multiple speakers 12. By this it is ensured that the sound of the virtual noise source can be detected at every seat location in the passenger compartment as a stereophonic object from the direction of the reproduction position, which corresponds to the position of real noise source 10.1.

Figure 2 is a schematic depiction for elucidation of the invention-specific method in vehicle 11. Reference symbols 10.1, 10.2 and 10.3 designate real noise sources of vehicle 11, with noise source 10.1 being engine noise, noise source 10.2 being air intake noise and noise source 10.3 being exhaust system noise. The reference symbols 12 designate assigned speakers of a speaker array in the passenger compartment for reproduction and rendering of sonic objects.

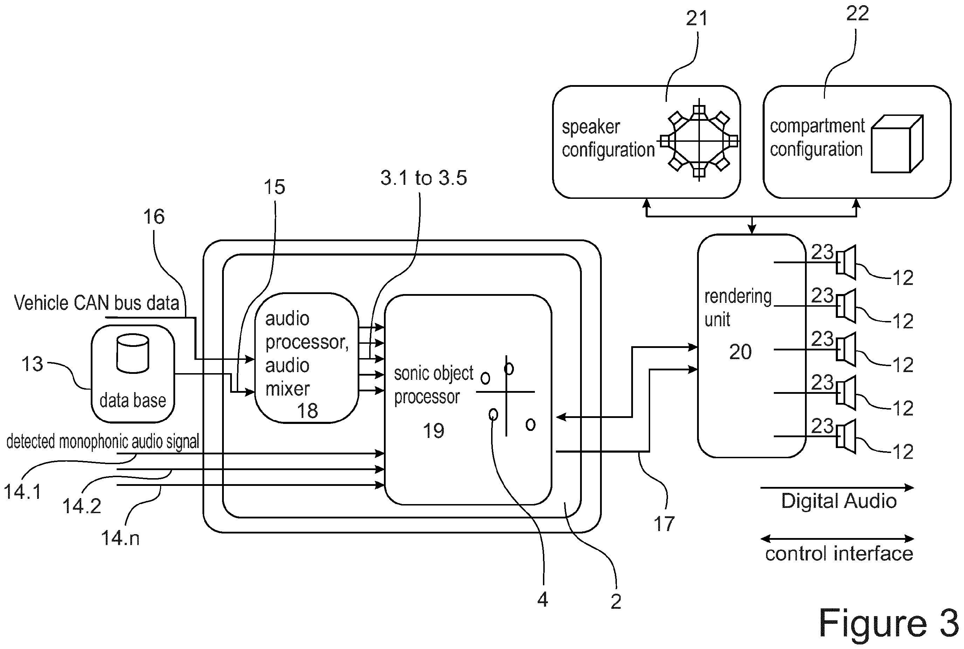

Figure 3 shows a device for stereophonic reproduction of virtual noise sources in vehicle 11. For better understanding, figures 1 and 2 can be consulted. The device comprises at least one, preferably multiple microphones (not shown) arranged on or in vehicle 11, by which a sound of a real noise source 10.1, 10.2, 10.3 of vehicle 11 can be detectable at at least one detection position as at least one monophonic audio signal, a data base 13 having at least one additional monophonic audio signal 3, a speaker array formed by multiple speakers 12 and a rendering device 2. Rendering device 2 has at least one input 14.1 for a detected monophonic audio signal 1, wherein the shown rendering device 2 has multiple inputs 14.2 to 14.n for multiple detected monophonic audio signals. Additionally, rendering device 2 has at least one input 15 for at least one additional monophonic audio signal 3, with the at least one additional monophonic audio signal 3 made available from data base 13. Reference symbol 16 designates a data input for making available metadata, with a CAN bus of vehicle 11 being coupled to the data input, so that CAN bus data of vehicle 11 can be used as metadata for modification and positioning of sonic objects. Reference symbol 17 shows a connection between rendering device 2 and a rendering unit 20. Rendering unit 20 has a multichannel audio output 23, by which the multiple speakers 12 of the speaker array can be controlled.

Rendering device 2 is set up to generate a sonic object of a sound of at least one virtual noise source using the at least one detected monophonic audio signal 1, the at least one additional monophonic audio signal 3 and at least the positional data of detection position 10.1, 10.2, 10.3. For this purpose, rendering device 12 has a first audio processor 18, by which the at least one additional monophonic audio signal 3 can be modified by means of metadata made available via data input 16. In the present example, multiple additional monophonic audio signals 3.1 to 3.5 are made available and transmitted to a sonic object processor 19. On sonic object processor 19, additionally detected monophonic audio signals 1 to n are made available. Sonic object processor 19 computes a sonic object 4 of a sound of a virtual noise source using at least one detected monophonic audio signal 1, at least one additional monophonic audio signal 3.1 to 3.5, and at least the positional data of the detection position, with the positional data of the detection position being made available as metadata via data input 16, wherein the metadata are assigned to the detected monophonic audio signals 1 and the additional monophonic audio signals 3.1 to 3.5. Rendering unit 20 is set up for rendering the at least one detected monophonic audio signal 1 and the at least one additional monophonic audio signal 3, so that with sonic object processor 19, using the at least one detected monophonic audio signal 1, the at least one additional monophonic audio signal 3 and the positional data of the detection position of generated sonic object 4 of a sound of a virtual noise source can be reproduced as a stereoscopic object in a virtual sonic space at least at the detection position with the speaker array, and is able to be reproduced in the passenger compartment of vehicle 11. For the rendering of a sonic object 4, a speaker configuration 21, which comprises a number and an arrangement of speakers 12, are allowed for. Additionally, with the rendering of a sonic object 4, a passenger compartment 22 can be taken into consideration, with passenger compartment 22 supplying information about the size and shape of the passenger compartment.

### List of reference symbols

- 1: detected monophonic audio signal
- 2: rendering device
- 3, 3.1 to 3.5: additional monophonic audio signal
- 4: generation of a sonic object; sonic object
- 5: making available CAN bus data
- 6: determination of a reproduction position of a sonic object
- 7: arrangement of multiple sonic objects in a virtual sonic space
- 8: rendering
- 9: reproduction and rendering of a sonic object
- 10.1, 10.2, 10.3: real noise sources
- 11: vehicle
- 12: speaker
- 13: database
- 14.1 to 14.n: input for detected monophonic audio signal
- 15: input for additional monophonic signal
- 16: data input - CAN bus data
- 17: connection
- 18: audio processor
- 19: sonic object processor
- 20: rendering unit
- 21: speaker configuration
- 22: compartment configuration
- 23: multichannel audio output

## Claims

1. A method for stereophonic representation of virtual noise sources in a vehicle (11), in which a sound of a real noise source (10.1, 10.2, 10.3) of a vehicle (11) is detected at at least one detection position, on or in the vehicle (11), as at least one monophonic audio signal (1), and using the at least one detected monophonic audio signal (1), at least one additional monophonic audio signal (3) and at least the positional data of the detection position, a sound at least of one virtual noise source is generated as at least one sonic object (4), wherein the at least one detected monophonic audio signal (1) and the at least one additional monophonic audio signal (3) are rendered so that the sound of the at least one virtual noise source is reproduced as a sonic object (4) in a virtual sonic space at least at the detection position and conveyed into a passenger compartment of the vehicle (11).

2. The method of claim 1, **characterized in that** when detecting the sound of the at least one real noise source (10.1, 10.2, 10.3) a direction and a distance of the real noise source (10.1, 10.2, 10.3) are detected.

3. The method of claim 1 or claim 2, **characterized in that** the at least one additional monophonic audio signal (3) is made available from a data base (13).

4. The method of any preceding claim, **characterized in that** as at least one additional monophonic audio signal (3) a synthetic monophonic audio signal is used.

5. The method of any preceding claim, **characterized in that** upon generating the sound of the at least one virtual noise source as a sonic object (4), data on the vehicle (11) made available from a CAN bus of the vehicle are taken into account.

6. The method of any preceding claim, **characterized in that** at least one detected monophonic audio signal (1) and/or the at least one additional virtual monophonic audio signal (3) are dynamically modulated.

7. The method of any preceding claim, **characterized in that** when rendering (8), the size of the passenger compartment, the shape of the passenger compartment, the number of speakers and/or a speaker arrangement are taken into account.

8. The method of any preceding claim, **characterized in that** the position of reproduction of the sonic object of a sound of a virtual noise source is altered.

9. The method of any preceding claim, **characterized in that** the sound of the virtual noise source is generated on the basis of sounds of multiple real noise sources.

10. The method of one of any preceding claim, **characterized in that** the sounds of multiple differing virtual noise sources are reproduced as sonic objects at various positions in the virtual sonic space.

11. A device for stereophonic representation of virtual noise sources in a vehicle (11), comprising at least one microphone placed on or in a vehicle (11), by which a sound of a real noise source (10.1, 10.2, 10.3) of the vehicle (11) can be detected at least one detection position as at least one monophonic audio signal (1), a data base (13) having at least one additional monophonic audio signal (3) for making available an additional monophonic audio signal (3), a speaker array formed by multiple speakers (12) and a rendering device (2), that has at least one input (14.1, 14.2, 14.n) for a detected monophonic audio signal (1), at least one input (15) for an additional monophonic audio signal (3), a data input (16) for making metadata available, and a multi-channel audio output (23) for controlling the speakers (12) of the speaker array, wherein the rendering device (2) is further set up to generate a sonic object (4) of the sound of at least one virtual noise source using the at least one detected monophonic audio signal (1), of at least one additional monophonic audio signal (3) and of at least the positional data of the detection position, wherein the rendering device (2) further is set up for rendering of the at least one detected monophonic audio signal (1) and of the at least one additional monophonic audio signal (3) in such a way that the sound of the at least one virtual noise source is reproduced as a sonic object (4) in a virtual sonic space at least at the detection position with the speakers (12) of the speaker array and is able to be reproduced in a passenger compartment of the vehicle (11).

12. The device of claim 11, **characterized in that** a CAN bus of the vehicle (11) is coupled with the rendering device (2) for making available CAN bus data via the data input (16).

13. The device of claim 11 or claim 12, **characterized in that** the rendering device (2) has a rendering unit (20) for rendering a sonic object (4) generated with at least one detected monophonic audio signal (1), at least one additional monophonic audio signal (3), and at least the positional data of the detection position.
